# EUROPÄISCHE PATENTSCHRIFT

(11) **EP 3 993 605 B1**
(45) Veröffentlichungstag und Bekanntmachung des Hinweises auf die Patenterteilung: **17.12.2025**
(21) Anmeldenummer: 20737132.9
(22) Anmeldetag: 03.07.2020
(51) Int. Cl.: A01G 9/24, F21S 19/00

(54) **BELEUCHTUNGSVORRICHTUNG UND BELEUCHTUNGSVERFAHREN FÜR ZUMINDEST EINE PFLANZE**
LIGHTING DEVICE AND LIGHTING METHOD FOR AT LEAST ONE PLANT
DISPOSITIF D'ÉCLAIRAGE ET PROCÉDÉ D'ÉCLAIRAGE POUR AU MOINS UNE PLANTE

(30) Priorität: 05.07.2019 DE 102019209916
(43) Veröffentlichungstag der Anmeldung: 11.05.2022
(73) Patentinhaber: Fraunhofer-Gesellschaft zur Förderung der angewandten Forschung e.V., 80686 München (DE)
(72) Erfinder: LÄNGLE, Thomas, 76131 Karlsruhe (DE); SEIFFER, Dirk, 76131 Karlsruhe (DE); REIMANN, Andreas, 52074 Aachen (DE); VOGEL, Simon, 52074 Aachen (DE)
(74) Vertreter: Pfenning, Meinig & Partner mbB
(86) Internationale Anmeldenummer: PCT/EP2020/068807
(87) Internationale Veröffentlichungsnummer: WO 2021/004932

(56) Entgegenhaltungen:
- EP-A2- 2 680 671
- CN-A- 109 156 225
- IT-A1- RM20 120 111
- KR-A- 20120 008 773
- KR-B1- 101 299 991

## Beschreibung

Die Erfindung betrifft eine Beleuchtungsvorrichtung für zumindest eine Pflanze, mit einer Kunstlicht-Einheit zum Bereitstellen eines Kunstlichts für das Beleuchten der Pflanze und mit einer Sonnenlicht-Einheit zum Bereitstellen eines Sonnenlichts für das Beleuchten der Pflanze. Solche Vorrichtungen sind beispielsweise aus KR 2012 0008773 A, EP 2 680 671 A2 und KR 101 299 991 B1 bekannt.

Die Erfindung betrifft auch ein entsprechendes Verfahren.

Bis 2050 werden 66 % der Weltbevölkerung in Städten leben. Das sind mehr als 6 Billiarden Menschen, mit steigender Tendenz. Gleichzeitig sind bereits 80 % der weltweiten Ackerflächen in landwirtschaftlicher Nutzung. Die nachhaltige Sicherung der städtischen Nahrungsmittelversorgung bei begrenzten Ressourcen wird zunehmend zur Herausforderung - insbesondere in dicht besiedelten Städten mit limitiertem Zugang zu umliegenden landwirtschaftlichen Gebieten, die zukünftig zudem in verstärktem Zielkonflikt mit Bebauungsflächen stehen werden. Des Weiteren sind intensive Anbaupraktiken, der massive Einsatz von Chemikalien und zunehmend ungünstigere klimatische Bedingungen für die zukünftige Nahrungsmittelproduktion ein großes Problem.

Vor diesem Hintergrund wird weltweit an innovativen Anbaumethoden und Technologien gearbeitet, welche diese Probleme adressieren und den Fokus auf eine Einbettung der Nahrungsmittelproduktion in die urbane Struktur legen. Ein besonders vielversprechender Ansatz liegt dabei im Vertical Farming, der vertikalen Pflanzenproduktion oder - bewirtschaftung in einem geschlossenem System unter Ausschluss abiotischer Umweltfaktoren wie Niederschläge oder Temperatur. Trotz des entscheidenden Vorteils eines maximalen Flächenertrags unter kontrolliert reproduzierbaren Innenraum- oder Indoor-Bedingungen verhindern aktuell insbesondere die hohen Energieaufwendungen und Gesamtbetriebskosten eine flächendeckende Anwendung der Technologie. Mit einem Energiekostenanteil von bis zu 80 % stellt die Pflanzenbeleuchtung dabei den größten Kostentreiber dar.

Entsprechend stellt sich die Aufgabe, eine Beleuchtungsvorrichtung für zumindest eine, also eine oder mehrere Pflanzen, bereitzustellen, welche energiesparend in der Innenraumlandwirtschaft (Indoor Farming) genutzt werden kann.

Diese Aufgabe wird durch die unabhängigen Patentansprüche gelöst. Vorteilhafte Ausführungsformen ergeben sich aus den abhängigen Patentansprüchen, der Beschreibung und der Figur.

Ein Aspekt betrifft eine Beleuchtungsvorrichtung für zumindest eine Pflanze, also eine oder mehrere Pflanzen, mit einer Kunstlicht-Einheit zum Bereitstellen eines Kunstlichts für das Beleuchten der Pflanze(n) und mit einer Sonnenlicht-Einheit zum Bereitstellen eines Sonnenlichts für das Beleuchten der Pflanze(n). Die Kunstlicht-Einheit kann dabei eine einstellbare Kunstlicht-Einheit sein, welche in der spektralen Verteilung und/oder der Intensität des bereitgestellten oder erzeugten Kunstlichtes einstellbar ist und beispielsweise lichtemittierende Dioden (LEDs) als Kunstlichtquellen aufweisen. Die Sonnenlicht-Einheit kann beispielsweise einen Sonnenlichtkollektor oder dergleichen umfassen.

Die Beleuchtungsvorrichtung umfasst auch eine Misch-Einheit zum Erzeugen eines Mischlichts aus dem Kunstlicht und dem Sonnenlicht, sowie eine Verteil-Einheit zum Verteilen des Mischlichts und Beleuchten der Pflanze(n) mit dem verteilten Mischlicht, sowie eine Einstell- oder Regel-Einheit zum automatischen Einstellen (oder Regeln) einer Eigenschaft des Mischlichts. Das Einstellen im Sinne der Erfindung kann also ein Regeln oder Steuern umfassen oder sein. Das Einstellen kann insbesondere ein dynamisches Einstellen sein, sodass die Eigenschaft des Mischlichts flexibel an sich ändernde Bedingungen, wie sie weiter unten noch ausgeführt werden, anpassbar ist. Insbesondere kann das Einstellen ein Einstellen zumindest einer Eigenschaft des Kunstlichts und/oder ein Einstellen einer Eigenschaft des Sonnenlichts umfassen. Das Einstellen des Kunstlichts kann beispielsweise durch ein Einstellen, also Steuern oder Regeln, der Kunstlicht-Einheit bewirkt werden, beispielsweise ein Dimmen. Das Einstellen des Sonnenlichts kann beispielsweise durch das Einstellen, also Steuern oder Regeln einer Filter-Einheit, wie sie weiter unten beschrieben ist, erzielt werden. Das Sonnenlicht, welches in der Misch-Einheit mit dem Kunstlicht gemischt wird, kann also auch ein gefiltertes und somit modifiziertes Sonnenlicht sein.

Das hat den Vorteil, dass eine spezifische Nutzung, insbesondere wellenlängen- und/oder intensitätsspezifische Nutzung, von Sonnenlicht unter kontrollierten Bedingungen im geschlossenen Raum ermöglicht wird. Es kann somit das Sonnenlicht mit der künstlichen Beleuchtung zu einer spezifischen Pflanzenlichtmischung supplementiert werden oder aber auch für das Pflanzenwachstum ungünstige Eigenschaften aus dem Sonnenlicht herausgefiltert werden. Die Pflanzenlichtmischung, also die Mischung des Lichts, mit welchem die Pflanze beleuchtet wird, kann also an die jeweiligen Bedürfnisse der Pflanze angepasst werden und so ein Wachstum verbessern. Dies kann auch, wie weiter unten beschrieben, sensorbasiert erfolgen, was eine besonders vorteilhafte dynamische Optimierung des Mischlichts an der Pflanze ermöglicht. Über die ergänzende künstliche Beleuchtung werden nicht nur signifikant Kosten im Energiebereich gespart, sondern auch durch die optimierte Ansteuerung der Leuchtmittel in der Kunstlicht-Einheit, die in den üblichen Systemen an der Leistungsgrenze betriebene lichtemittierende Dioden sind, in ihrer Lebenszeit verlängert werden. Dies führt auch zu reduziertem Abfallaufkommen und schont somit die Resourcen. Dadurch, dass die beschriebene Beleuchtungsvorrichtung keine weiteren Voraussetzungen an das die Innenraum-Landwirtschaft stellt, kann sie im gesamten Feld des Indoor-Farming eingesetzt werden und somit eine wettbewerbsfähige regionale Lebensmittelproduktion ermöglichen.

Die beschriebene Beleuchtungsvorrichtung überwindet somit die Nachteile der im Indoor-Farming bisher üblichen sonnenundurchlässigen Gebäudehülle mit dem ausschließlichen Betrieb von energieintensivem Kunstlicht. Der beschriebene Aufbau ermöglicht auch das Regeln der Beleuchtungsvorrichtung in einem geschlossenen Regelkreis, welcher beispielsweise, wie weiter unten beschrieben, eine Sonnenlichtsammlung und -weiterleitung, eine optische Filterung des Sonnenlichts, eine Mischung von Sonnen- und Kunstlicht, eine sensorbasierte Regelung der Eigenschaften des Mischlichts mit für das Pflanzenwachstum begünstigenden Lichtmischungen sowie die homogene Verteilung des Mischlichts umfassen kann. Es können somit durch die Mischung von Sonnen- und Kunstlicht optimierte Bedingungen für das Pflanzenwachstum in jeder Wachstumsphase geschaffen werden, wobei überdies der Energieverbrauch minimiert wird.

In einer vorteilhaften Ausführungsform ist hier vorgesehen, dass die einstellbare (insbesondere regelbare) Eigenschaft eine spektrale Verteilung und/oder eine Intensität umfasst. Das hat den Vorteil, dass das Mischlicht besonders einfach und kostengünstig an die biologischen Bedingungen angepasst werden kann.

In einer anderen vorteilhaften Ausführung ist vorgesehen, dass die Einstell-Einheit ausgebildet ist, eine Eigenschaft des Mischlichts dynamisch einzustellen, insbesondere durch ein Einstellen der Eigenschaft des Sonnenlichts und/oder einer Eigenschaft des Kunstlichts. Das hat den Vorteil der flexiblen Anpassung der Beleuchtung an sich beispielsweise im Tagesverlauf ändernde Bedingungen, welche sowohl durch einen Wachstumszyklus der Pflanze, als auch durch einen astronomischen Zyklus oder einen meteorologischen Einfluss bedingt sein können.

Erfindungsgemäß ist vorgesehen, dass die Einstell-Einheit ausgebildet ist, die Eigenschaft des Mischlichts gemäß einer hinterlegten Vorschrift einzustellen. Eine derartige hinterlegte Vorschrift kann beispielsweise auch als vorgegebene Mischlichtrezeptur bezeichnet werden. Erfindungsgemäß umfasst die hinterlegte Vorschrift eine vorgegebene, spektrale Verteilung und beispielsweise eine vorgegebene Intensität des Lichtes. Die hinterlegte Vorschrift oder Rezeptur kann auch als (hinterlegte) Sollwertvorgabe verstanden oder bezeichnet werden. Die hinterlegte Vorschrift umfasst auch eine zeitliche Veränderung des Mischlichts, in Form von Funktionen, welche einen zeitlichen Verlauf der spektralen Verteilung und beispielsweise einer Intensität, welche das Mischlicht haben soll, umfasst. So können beispielsweise Wachstumsphasen in Pflanzen bei der Beleuchtung berücksichtigt werden, oder auch allgemein Präferenzen der von der Beleuchtungsvorrichtung zu beleuchtenden Pflanzensorte oder Pflanzenart, was wiederum ein verbessertes Pflanzenwachstum bzw. eine erhöhte Wirksamkeit der Beleuchtung mit minimierten Energieverbrauch mit sich bringt.

Dabei kann vorgesehen sein, dass die Vorschrift von einer Messgröße, insbesondere einer Uhrzeit und/oder Jahreszeit und/oder einer Temperatur und/oder einer Luftfeuchtigkeit und/oder einer Bodenfeuchtigkeit und/oder einer Nährstoffkonzentration und/oder einer Pflanzensorte und/oder einer Pflanzenart und/oder zu induzierenden Pflanzeninhaltsstoffen und/oder einem Datum abhängt. Damit kann eine besonders genaue Anpassung der Beleuchtung erfolgen.

In einer weiteren besonders vorteilhaften Ausführungsform ist vorgesehen, dass die Beleuchtungsvorrichtung auch eine Sensor-Einheit zum Detektieren einer spektralen Verteilung und/oder einer Intensität des Sonnenlichts und/oder des Mischlichts und/oder des Kunstlichts aufweist. Dabei ist die Einstell-Einheit ausgebildet, die Eigenschaft des Mischlichts in Abhängigkeit der detektierten spektralen Verteilung und/oder der detektierten Intensität einzustellen oder zu regeln. In besonders vorteilhafter Weise kann dabei durch einen Abgleich der detektierten spektralen Verteilung und/oder Intensität mit der hinterlegten Vorschrift, also der vorgegebenen Mischlichtrezeptur, ermittelt werden, welche spektralen Bestandteile verstärkt und welche spektralen Bestandteile gedämpft werden müssen. Die entsprechend zur Erzeugung eines optimalen Beleuchtungsspektrums möglicherweise erforderliche dynamische Einstellung oder Modulation des Sonnenlichts, beispielsweise durch Filterung mittels der weiter unten beschriebenen Filter-Einheit, und/oder die möglicherweise erforderliche Anreicherung durch das Kunstlicht kann dabei durch ein entsprechendes Optimierungsverfahren berechnet werden. Da spektrale Verteilung und/oder Intensität effizient und kostengünstig durch die handelsüblichen Spektralsensoren detektiert werden kann, kann auch die Spektralanalyse des variablen Sonnenlichts bzw. der anderen Lichter effizient und kostengünstig erfolgen.

Entsprechend ist in einer weiteren vorteilhaften Ausführungsform in der Beleuchtungsvorrichtung auch eine durch die Einstell-Einheit einstellbare Filter-Einheit zum optischen Filtern des Sonnenlichts und/oder des Mischlichts und/oder des Kunstlichts vorgesehen. Besonders vorteilhaft ist hier das optische Filtern des Sonnenlichts und/oder des Mischlichts, da deren spektrale Komponenten im Gegensatz zum Kunstlicht nicht beliebig erzeugbar sind. Damit können auf einfache Weise auch unerwünschte Komponenten des Lichts, welche möglicherweise ein Pflanzenwachstum beeinträchtigen, reduziert werden und so die Wirksamkeit der Beleuchtung insgesamt verbessert werden.

In einer anderen vorteilhaften Ausführungsform ist vorgesehen, dass die Verteil-Einheiten mehrere Leucht-Einheiten umfasst, auf welche das Mischlicht homogen verteilt wird und welche das Mischlicht dann auf die Pflanze(n) abstrahlen. Dabei sind die Leucht-Einheiten insbesondere bei bestimmungsgemäßem Gebrauch, also beispielsweise in einem Schwerefeld der Erde betrachtet, übereinander angeordnet. Gerade bei dieser Anordnung übereinander, der vertikalen Anordnung, kann nämlich einerseits viel Platz gespart werden, andererseits sind Beschattungseffekte in den üblichen Beleuchtungseinheiten stark einschränkend, so dass das bei den Pflanzen ankommende Licht hier typischerweise besonders ungleichmäßig ist. Daher wird hier der Vorteil der homogenen Beleuchtung, welche ein gleichmäßiges Wachstum der unterschiedlichen Pflanzen oder Pflanzenteile bewirkt, verstärkt.

Ein weiterer Aspekt betrifft auch ein Pflanzenkultivierungssystem mit einer Beleuchtungsvorrichtung nach einer oder mehrerer der beschriebenen Ausführungsformen sowie mit einer oder mehreren der folgenden Vorrichtungen:
Einer Temperiervorrichtung zum Einstellen einer Temperatur für durch die Beleuchtungsvorrichtung beleuchtbare Pflanze(n); einer Luftbefeuchtungsvorrichtung zum Einstellen einer Luftfeuchtigkeit für die durch die Beleuchtungsvorrichtung beleuchtbare Pflanze(n); einer Bodenbefeuchtungsvorrichtung zum Einstellen einer Bodenfeuchtigkeit für die durch die Beleuchtungsvorrichtung beleuchtbare Pflanze(n); einer Düngevorrichtung zum Einstellen einer Nährstoffkonzentration für die durch die Beleuchtungsvorrichtung beleuchtbare Pflanze(n). Das hat den Vorteil, dass durch die Beleuchtungsvorrichtung über eine zentralisierte oder abhängige, auch interdependente Steuerung der unterschiedlichen Steuervorrichtungen das Pflanzenwachstum verbessert wird und die Beleuchtung in ihrer Effizienz weiter gesteigert wird.

Ein zusätzlicher Aspekt betrifft auch ein Verfahren zum Beleuchten zumindest einer Pflanze, mit den Verfahrensschritten des Bereitstellens eines Kunstlichts für das Beleuchten der Pflanze, des Bereitstellens eines Sonnenlichts für das Beleuchten der Pflanze; des Erzeugens eines Mischlichts aus dem Kunstlicht und dem Sonnenlicht; dem Einstellen einer Eigenschaft des Mischlichts; und dem Verteilen des Mischlichts und Beleuchten der Pflanze mit dem verteilten Mischlicht.

Vorteile und vorteilhafte Ausführungsformen des Verfahrens entsprechen hier Vorteilen und vorteilhaften Ausführungsformen der Beleuchtungsvorrichtung bzw. des Pflanzenkultivierungssystems.

Die vorstehend in der Beschreibung genannten Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in der Figur nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen oder abhängigen Anspruchs aufweisen. Es sind darüber hinaus Ausführungen und Merkmalskombinationen, insbesondere durch die oben dargelegten Ausführungen, als offenbart anzusehen, die über den in den Rückbezügen der Ansprüche dargelegten Merkmalskombinationen hinausgehen oder von diesen abweichen.

Ausführungsbeispiele der Erfindung wird nachfolgend anhand einer schematischen Zeichnung näher erläutert.

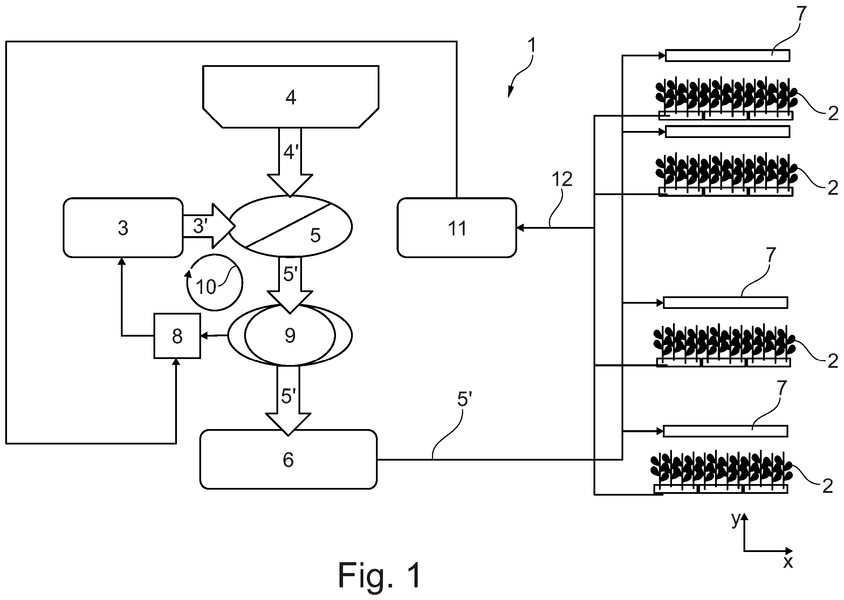

Dabei zeigt Fig. 1 eine beispielhafte Ausführungsform einer Beleuchtungsvorrichtung für zumindest eine Pflanze.

Die dargestellte Beleuchtungsvorrichtung 1 dient vorliegend der Beleuchtung mehrerer Pflanzen 2 und umfasst eine Kunstlicht-Einheit 3 zum Bereitstellen eines Kunstlichts 3' sowie eine Sonnenlicht-Einheit 4 zum Bereitstellen eines Sonnenlichts 4', welche beide dem Beleuchten der Pflanze 2 dienen. Die Beleuchtungsvorrichtung 1 weist weiterhin auch eine Misch-Einheit 5 zum Erzeugen eines Mischlichts 5' aus dem Kunstlicht 3' und dem Sonnenlicht 4' auf, sowie eine Verteil-Einheit 6 zum Verteilen des Mischlichts 5' und Beleuchten der Pflanzen 2 mit dem verteilten Mischlicht 5'. Vorliegend weist die Verteil-Einheit 6 auch mehrere Leucht-Einheiten 7 auf, durch welche das Mischlicht homogen verteilt. Die Leucht-Einheiten 7 sind dabei vorliegend übereinander, d. h. in y-Richtung übereinander, und jeweils (in y-Richtung) oberhalb der zu beleuchtenden Pflanzen 2 angeordnet.

Die Beleuchtungsvorrichtung 1 weist auch eine Einstell-Einheit 8 zum Einstellen einer Eigenschaft des Mischlichts 5' auf. Dies erfolgt vorliegend mittelbar dadurch, dass die Einstell-Einheit 8 die Kunstlicht-Einheit 3 und somit über das (hier unmittelbar einstellbare) Kunstlicht 3' eine Eigenschaft wie beispielsweise eine spektrale Verteilung und/oder eine Intensität des Mischlichts 5' mittelbar einstellt. Da die Beleuchtungsvorrichtung 1 vorliegend auch eine Sensor-Einheit 9 zum Detektieren einer spektralen Verteilung und/oder einer Intensität vorliegend des Mischlichts aufweist und die Einstell-Einheit 8 ausgebildet ist, die Eigenschaft des Mischlichts in Abhängigkeit der detektierten spektralen Verteilung bzw. Intensität des Mischlichts einzustellen, also vorliegend die Kunstlicht-Einheit 3 in Abhängigkeit der detektierten Spektralverteilung bzw. Intensität zu steuern, wird im gezeigten Beispiel ein durch den Ringpfeil 10 symbolisierter geschlossener Regelkreis realisiert. Dieser Regelkreis kann beispielsweise auch durch eine entsprechende Filter-Einheit zum optischen Filtern eines der Lichter 3', 4', 5' erweitert werden, wodurch dann nicht nur eine Ergänzung oder Supplementierung des Sonnenlichts 4' durch das Kunstlicht 3' realisiert werden kann, sondern auch ein Abdämpfen bestimmter spektraler Komponenten des Sonnenlichts 4' und damit auch des Mischlichts 5'.

Im gezeigten Beispiel ist die Einstell-Einheit 8 auch ausgebildet, die Eigenschaft des Mischlichts gemäß einer hinterlegten Vorschrift 11 einzustellen. Die hinterlegte Vorschrift 11 ist dabei vorliegend an die Art der Pflanzen 2 angepasst und kann dabei von einer Messgröße 12 abhängen, vorliegend einer Bodenfeuchtigkeit.

## Patentansprüche

1. Innenraumlandwirtschafts-Pflanzenbeleuchtungsvorrichtung (1) für zumindest eine Pflanze (2), mit
- einer Kunstlicht-Einheit (3) zum Bereitstellen eines Kunstlichts (3') für das Beleuchten der Pflanze (2); und
- einer Sonnenlicht-Einheit (4) zum Bereitstellen eines Sonnenlichts (4') für das Beleuchten der Pflanze (2);
**gekennzeichnet durch**
- eine Misch-Einheit (5) zum Erzeugen eines Mischlichts (5') aus dem Kunstlicht (3') und dem Sonnenlicht (4');
- eine Verteil-Einheit (6) zum Verteilen des Mischlichts (5') und Beleuchten der Pflanze (2) mit dem verteilten Mischlicht (5'); und
- eine Einstell-Einheit (8) zum Einstellen einer Eigenschaft des Mischlichts (5') gemäß einer hinterlegten Vorschrift (11);
**dadurch gekennzeichnet, dass**
die hinterlegte Vorschrift (11) einen zeitlichen Verlauf einer spektralen Verteilung, welche das Mischlicht haben soll umfasst.

2. Innenraumlandwirtschafts-Pflanzenbeleuchtungsvorrichtung (1) nach Anspruch 1,
**dadurch gekennzeichnet, dass**
die einstellbare Eigenschaft eine spektrale Verteilung und/oder eine Intensität umfasst.

3. Innenraumlandwirtschafts-Pflanzenbeleuchtungsvorrichtung (1) nach einem der vorhergehenden Ansprüche,
**dadurch gekennzeichnet, dass**
die Einstell-Einheit (8) ausgebildet ist, die Eigenschaft des Mischlichts (5') dynamisch einzustellen.

4. Beleuchtungsvorrichtung (1) nach einem der vorhergehenden Ansprüche,
**dadurch gekennzeichnet, dass**
die Vorschrift (11) einen zeitlichen Verlauf einer Intensität welche das Mischlicht haben soll umfasst.

5. Innenraumlandwirtschafts-Pflanzenbeleuchtungsvorrichtung (1) nach Anspruch 4,
**dadurch gekennzeichnet, dass**
die Vorschrift (11) von einer Uhrzeit und/oder einer Jahreszeit und/oder einer Temperatur und/oder einer Luftfeuchtigkeit und/oder einer Bodenfeuchtigkeit und/oder Nährstoffkonzentration abhängt.

6. Innenraumlandwirtschafts-Pflanzenbeleuchtungsvorrichtung (1) nach einem der vorhergehenden Ansprüche,
**gekennzeichnet durch**
- eine Sensor-Einheit (9) zum Detektieren einer spektralen Verteilung und/oder einer Intensität des Sonnenlichts (4') und/oder des Mischlichts (5') und/oder des Kunstlichts (3');
wobei die Einstell-Einheit (8) ausgebildet ist, die Eigenschaft des Mischlichts (5') in Abhängigkeit der detektierten spektralen Verteilung und/oder der detektierten Intensität einzustellen.

7. Innenraumlandwirtschafts-Pflanzenbeleuchtungsvorrichtung (1) nach einem der vorhergehenden Ansprüche,
**gekennzeichnet durch**
- eine durch die Einstell-Einheit (8) einstellbare Filter-Einheit zum optischen Filtern des Sonnenlichts (4') und/oder des Mischlichts (5') und/oder des Kunstlichts (3').

8. Innenraumlandwirtschafts-Pflanzenbeleuchtungsvorrichtung (1) nach einem der vorhergehenden Ansprüche,
**dadurch gekennzeichnet, dass**
die Verteil-Einheit (6) mehrere Leucht-Einheiten (7) umfasst, auf welche das Mischlicht homogen verteilt wird.

9. Pflanzenkultivierungssystem mit einer Innenraumlandwirtschafts-Pflanzenbeleuchtungsvorrichtung (1) nach einem der vorhergehenden Ansprüche, sowie mit einer oder mehreren der folgenden Vorrichtungen:
- einer Temperiervorrichtung zum Einstellen einer Temperatur für die durch die Beleuchtungsvorrichtung (1) beleuchtbare Pflanze (2);
- einer Luftbefeuchtungsvorrichtung zum Einstellen einer Luftfeuchtigkeit für die durch die Beleuchtungsvorrichtung (1) beleuchtbare Pflanze (2);
- einer Bodenbefeuchtungsvorrichtung zum Einstellen einer Bodenfeuchtigkeit für die durch die Beleuchtungsvorrichtung (1) beleuchtbare Pflanze (2);
- einer Düngevorrichtung zum Einstellen einer Nährstoffkonzentration für die durch die Beleuchtungsvorrichtung (1) beleuchtbare Pflanze (2).

10. Verfahren zum Beleuchten zumindest einer Pflanze (2), mit den Verfahrensschritten:
- Bereitstellen eines Kunstlichts (3') für das Beleuchten der Pflanze (2);
- Bereitstellen eines Sonnenlichts (4') für das Beleuchten der Pflanze (2);
- Erzeugen eines Mischlichts (5') aus dem Kunstlicht (3') und dem Sonnenlicht (4');
- Einstellen einer Eigenschaft des Mischlichts (5') gemäß einer hinterlegten Vorschrift (11), welche einen zeitlichen Verlauf einer spektralen Verteilung welche das Mischlicht haben soll umfasst; und
- Verteilen des Mischlichts (5'); und
- Beleuchten der Pflanze (2) mit dem verteilten Mischlicht (5').

## Claims

1. Indoor farming plant lighting device (1) for at least one plant (2) comprising
- an artificial light unit (3) for providing artificial light (3') for lighting the plant (2); and
- a sunlight unit (4) for providing sunlight (4') for lighting the plant (2);
**characterized by**
- a mixing unit (5) for generating mixed light (5') from the artificial light (3') and the sunlight (4');
- a distribution unit (6) for distributing the mixed light (5') and lighting the plant (2) with the distributed mixed light (5'); and
- a setting unit (8) for setting a property of the mixed light (5') in accordance with a stored specification (11);
**characterized in that**
- the stored specification (11) comprises a time sequence of the spectral distribution that the mixed light should have.

2. Indoor farming plant lighting device (1) according to claim 1,
**characterized in that**
the settable property comprises a spectral distribution and/or an intensity.

3. Indoor farming plant lighting device (1) according to any of the preceding claims,
**characterized in that**
the setting unit (8) is configured to dynamically set the property of the mixed light (5').

4. A lighting device (1) in accordance with one of the preceding claims,
**characterized in that**
the specification (11) comprises a time sequence of an intensity that the mixed light should have.

5. Indoor farming plant lighting device (1) according to claim 4,
**characterized in that**
the specification (11) depends on a time and/or a season
and/or a temperature and/or a humidity and/or
a soil moisture and/or a nutrient concentration.

6. Indoor farming plant lighting device (1) according to any of the preceding claims,
**characterized by**
- a sensor unit (9) for detecting a spectral distribution and/or an intensity of the sunlight (4') and/or of the mixed light (5') and/or of the artificial light (3');
with the setting unit (8) being configured to set the property of the mixed light (5') in dependence on the detected spectral distribution and/or on the detected intensity.

7. Indoor farming plant lighting device (1) according to any of the preceding claims,
**characterized by**
- a filter unit settable by the setting unit (8) for the optical filtering of the sunlight (4') and/or of the mixed light (5') and/or of the artificial light (3').

8. Indoor farming plant lighting device (1) according to any of the preceding claims,
**characterized in that**
the distribution unit (6) comprises a plurality of illuminating units (7) over which the mixed light is homogeneously distributed.

9. A plant cultivation system having an indoor farming plant lighting device (1) in accordance with one of the preceding claims and having one or more of the following devices:
- a temperature control device for setting a temperature for the plant (2) that can be illuminated by the lighting device (1);
- a humidifier for setting a humidity for the plant (2) that can be illuminated by the lighting device (1);
- a soil moisturizing device for setting a soil moisture for the plant (2) that can be illuminated by the lighting device (1);
- a fertilization device for setting a nutrient concentration for the plant (2) that can be illuminated by the lighting device (1).

10. A method of lighting at least one plant (2) comprising the method steps:
- providing artificial light (3') for the lighting of the plant (2);
- providing sunlight (4') for lighting the plant (2);
- generating mixed light (5') from the artificial light (3') and the sunlight (4');
- setting a property of the mixed light (5') in accordance with a stored specification (11) that comprises a time sequence of a spectral distribution that the mixed light should have; and
- distributing the mixed light (5'); and
- lighting the plant (2) with the distributed mixed light (5').

## Revendications

1. Dispositif d'éclairage pour la culture de plantes en intérieur (1) pour au moins une plante (2), avec
- une unité de lumière artificielle (3) pour fournir une lumière artificielle (3') pour éclairer la plante (2) ; et
- une unité de lumière solaire (4) pour fournir une lumière solaire (4') pour éclairer la plante (2) ;
**caractérisé par**
- une unité de mélange (5) pour produire une lumière mixte (5') à partir de la lumière artificielle (3') et de la lumière solaire (4') ;
- une unité de distribution (6) pour distribuer la lumière mixte (5') et éclairer la plante (2) avec la lumière mixte (5') distribuée ; et
- une unité de réglage (8) pour régler une propriété de la lumière mixte (5') conformément à une consigne (11) enregistrée ;
**caractérisé en ce que**
- la consigne (11) enregistrée comprend une variation temporelle d'une distribution spectrale que doit avoir la lumière mixte.

2. Dispositif d'éclairage pour la culture de plantes en intérieur (1) selon la revendication 1,
**caractérisé en ce que**
la propriété réglable comprend une distribution spectrale et/ou une intensité.

3. Dispositif d'éclairage pour la culture de plantes en intérieur (1) selon l'une quelconque des revendications précédentes,
**caractérisé en ce que**
l'unité de réglage (8) est réalisée pour régler de manière dynamique la propriété de la lumière mixte (5').

4. Dispositif d'éclairage (1) selon l'une quelconque des revendications précédentes,
**caractérisé en ce que**
la prescription (11) comprend une variation temporelle d'une intensité que doit avoir la lumière mixte.

5. Dispositif d'éclairage pour la culture de plantes en intérieur (1) selon la revendication 4,
**caractérisé en ce que**
la prescription (11) dépend d'une heure et/ou d'une saison
et/ou d'une température et/ou d'une humidité de l'air et/ou
d'une humidité du sol et/ou d'une concentration de nutriments.

6. Dispositif d'éclairage pour la culture de plantes en intérieur (1) selon l'une quelconque des revendications précédentes,
**caractérisé par**
- une unité de capteur (9) pour détecter une distribution spectrale et/ou une intensité de la lumière solaire (4') et/ou de la lumière mixte (5') et/ou de la lumière artificielle (3') ;
dans lequel l'unité de réglage (8) est réalisée pour régler la propriété de la lumière mixte (5') en fonction de la distribution spectrale détectée et/ou de l'intensité détectée.

7. Dispositif d'éclairage pour la culture de plantes en intérieur (1) selon l'une quelconque des revendications précédentes,
**caractérisé par**
- une unité de filtrage réglable par l'unité de réglage (8) pour filtrer optiquement la lumière solaire (4') et/ou la lumière mixte (5') et/ou la lumière artificielle (3').

8. Dispositif d'éclairage pour la culture de plantes en intérieur (1) selon l'une quelconque des revendications précédentes,
**caractérisé en ce que**
l'unité de distribution (6) comprend plusieurs unités d'éclairage (7) sur lesquelles la lumière mixte est distribuée de manière homogène.

9. Système de culture de plantes avec un dispositif d'éclairage pour la culture de plantes en intérieur (1) selon l'une quelconque des revendications précédentes, ainsi qu'un ou plusieurs des dispositifs suivants :
- un dispositif de régulation de la température pour régler une température pour la plante (2) pouvant être éclairée par le dispositif d'éclairage (1) ;
- un dispositif d'humidification de l'air pour régler une humidité de l'air pour la plante (2) pouvant être éclairée par le dispositif d'éclairage (1) ;
- un dispositif d'humidification du sol pour régler une humidité du sol pour la plante (2) pouvant être éclairée par le dispositif d'éclairage (1) ;
- un dispositif de fertilisation pour régler une concentration de nutriments pour la plante (2) pouvant être éclairée par le dispositif d'éclairage (1).

10. Procédé pour éclairer au moins une plante (2), avec les étapes de procédé :
- fourniture d'une lumière artificielle (3') pour l'éclairage de la plante (2) ;
- fourniture d'une lumière solaire (4') pour l'éclairage de la plante (2) ;
- production d'une lumière mixte (5') à partir de la lumière artificielle (3') et de la lumière solaire (4') ;
- réglage d'une propriété de la lumière mixte (5') conformément à une consigne (11) enregistrée, laquelle comprend une variation temporelle d'une distribution spectrale que doit avoir la lumière mixte ; et
- distribution de la lumière mixte (5') ; et
- éclairage de la plante (2) avec la lumière mixte (5') distribuée.
